# EUROPEAN PATENT SPECIFICATION

(11) **EP 2 354 501 B1**
(45) Date of publication and mention of the grant of the patent: **06.03.2013**
(21) Application number: 11151336.2
(22) Date of filing: 19.01.2011
(51) Int. Cl.: F02D 23/00, F02D 13/02, F02D 41/00, F02D 23/02, F02D 41/18

(54) **Control apparatus for internal combustion engine**
Steuerungsvorrichtung für einen Verbrennungsmotor
Appareil de contrôle pour moteur à combustion interne

(30) Priority: 19.01.2010 JP 2010009236
(43) Date of publication of application: 10.08.2011
(73) Proprietor: TOYOTA JIDOSHA KABUSHIKI KAISHA, Toyota-shi, Aichi-ken, 471-8571 (JP)
(72) Inventor: Kogo, Tomoyuki, Toyota-shi, Aichi-ken 471-8571 (JP); Ishiyama, Shinobu, Toyota-shi, Aichi-ken 471-8571 (JP); Ogawa, Takashi, Toyota-shi, Aichi-ken 471-8571 (JP); Ito, Katsuhiro, Toyota-shi, Aichi-ken 471-8571 (JP); Iwata, Kazuyasu, Toyota-shi, Aichi-ken 471-8571 (JP); Yanase, Yoshinori, Toyota-shi, Aichi-ken 471-8571 (JP)
(74) Representative: Intès, Didier Gérard André

(56) References cited:
- EP-A2- 1 081 361
- US-A- 5 190 012
- US-A1- 2007 074 707
- US-A1- 2007 240 679

## Description

### BACKGROUND OF THE INVENTION

### 1. Field of the Invention

The invention relates to a control apparatus for an internal combustion engine. More particularly, the invention relates to a control apparatus for an internal combustion engine provided with a turbocharger.

### 2. Description of the Related Art

One known control apparatus for an internal combustion engine is configured to heat a catalyst by advancing the valve opening timing of an exhaust valve, as described in Japanese Patent Application Publication No. 2002-227630 (JP-A-2002-227630), for example. When the valve opening timing of the exhaust valve is advanced (i.e., when the exhaust valve is opened early), high temperature exhaust gas immediately after combustion is discharged from within the cylinder, so the exhaust temperature increases. The related art uses this increased exhaust temperature to heat the catalyst.

In US 2007/240679 A1 and US 5 190 012 A, other control apparatuses were disclosed which included intake airflow and pressure sensors. Another known control apparatus is configured to calculate an intake air amount based on output from a boost pressure sensor, in an internal combustion engine provided with a turbocharger. Typically when the turbocharger is operating, a boost pressure sensor may be more suitable for calculating the intake air amount than an airflow sensor, so in this case, the related art obtains the intake air amount based on the output from the boost pressure sensor.

In the related art, when opening the exhaust valve early by a variable valve timing mechanism (VVT), the phase of the valve is advanced, so the valve closing timing is also advanced (i.e., the exhaust valve also closes early). Typically, when the valve closing timing of the exhaust valve is advanced, the internal EGR amount increases, so the amount of exhaust gas that is blown back from inside the cylinder to the intake passage (i.e., the blowback amount) increases. This phenomenon occurs due to the execution of control to close the exhaust valve early and the like even with a different type of variable valve timing mechanism than the VVT described above.

Meanwhile, in an internal combustion engine provided with a turbocharger, the boost pressure sensor is often mounted in the intake manifold relatively close to the intake ports of the cylinders. Therefore, when control to close the exhaust valve early is executed, the pressure detected by the boost pressure sensor will fluctuate due to the blowback of the exhaust gas. This fluctuation will cause error in the calculated value of the intake air amount if the intake air amount is calculated based on the output from the boost pressure sensor. Incidentally, this problem is not limited to control to close the exhaust valve early, but also occurs when the amount of exhaust gas blowback has increased for some reason.

### SUMMARY OF THE INVENTION

In order to solve the foregoing problem, the invention provides a control apparatus for an internal combustion engine provided with a turbocharger, that is capable of accurately calculating an intake air amount even if the valve closing timing of an exhaust valve is advanced or if an amount of exhaust gas blowback has increased, as well as a method using such an apparatus.

Therefore, a first aspect of the invention relates to a control apparatus for an internal combustion engine that includes an airflow sensor that detects an intake air amount of an internal combustion engine, a turbocharger that supercharges intake air using exhaust pressure of the internal combustion engine, a boost pressure sensor that is arranged downstream of the airflow sensor and detects a boost pressure of the intake air supercharged by the turbocharger, and operating state detecting/controlling means for detecting an operating state of the internal combustion engine and controlling the internal combustion engine. The control apparatus includes intake air amount obtaining means for obtaining the intake air amount based on output of the boost pressure sensor or output of the airflow sensor, based on a comparison of a detection value indicative of a state of the internal combustion engine and a predetermined reference value.
The operating state detecting/controlling means includes exhaust valve controlling means for advancing a valve closing timing of an exhaust valve more than a reference valve closing timing according to the operating state of the internal combustion engine, and the intake air amount obtaining means includes first intake air amount obtaining means for obtaining the intake air amount based on the output of the boost pressure sensor when an advance amount of the valve closing timing of the exhaust valve is equal to or less than a predetermined reference value, and second intake air amount obtaining means for obtaining the intake air amount based on the output of the airflow sensor when the advance amount of the valve closing timing of the exhaust valve is greater than the reference value.

According to the control apparatus described above, when the advance amount of the valve closing timing of the exhaust valve is equal to or less than the reference value, it is thought that the output of the boost pressure sensor will not be affected much by the blowback of the exhaust gas. In this case, the first intake air amount obtaining means can accurately obtain the intake air amount based on the output of the boost pressure sensor that is very responsive and has good intake air amount calculating accuracy. Also, if the advance amount is greater than the reference value, it is thought that there is error in the output of the boost pressure sensor. In this case, the airflow sensor tends to be less affected by blowback as the position in which it is arranged is farther upstream of the boost pressure sensor. Therefore, the second intake air amount obtaining means can correctly obtain the intake air amount based on the output of the airflow sensor. Accordingly, the method used for obtaining the intake air amount can be appropriately selected as the situation demands based on the advance amount of the exhaust valve, so a calculation method that is as accurate as possible can be selected according to the blowback amount of exhaust gas.

Also, in the control apparatus described above, the intake air amount obtaining means may further include third intake air amount obtaining means for operating in place of the first and second intake air amount obtaining means when the advance amount of the valve closing timing of the exhaust valve exceeds another reference value that is set at a value larger than the reference value, and obtaining the intake air amount based on a speed and load ratio of the internal combustion engine.

According to the control apparatus described above, when the advance amount of the valve closing timing of the exhaust valve exceeds the other reference value that is greater than the reference value, it is thought that there is error in both the output of the boost pressure sensor and the output of the airflow sensor. In this case, the third intake air amount obtaining means can obtain the intake air amount as accurately as possible based on the engine speed and load ratio, instead of using the outputs from the sensors.

According to a second aspect of the invention, instead of the exhaust valve controlling means, in the control apparatus described above, the operating state detecting/controlling means includes blowback amount obtaining means for obtaining, based on the output of the boost pressure sensor, a blowback amount of exhaust gas that is blown back to an intake system of the internal combustion engine, and the intake air amount obtaining means includes first intake air amount obtaining means for obtaining the intake air amount based on the output of the boost pressure sensor when the blowback amount of exhaust gas is equal to or less than a predetermined reference value, and second intake air amount obtaining means for obtaining the intake air amount based on the output of the airflow sensor when the blowback amount of exhaust gas is greater than the reference value.

According to the control apparatus described above, the blowback amount obtaining means is able to obtain, based on the output of the boost pressure sensor, the blowback amount of exhaust gas that is blown back to the intake system. When this blowback amount is equal to or less than the reference value, it is thought that the output of the boost pressure sensor is normal, so the intake air amount can be accurately calculated based on the output of the boost pressure sensor by the first intake air amount obtaining means. Also, when the blowback amount is greater than the reference value, the intake air amount can be accurately obtained based on the output of the airflow sensor by the second intake air amount obtaining means. Accordingly, the method used to calculate the intake air amount can be appropriately selected as the situation demands based on the blowback amount of the exhaust gas, so various controls that use the intake air amount can be accurately executed.

Also, the control apparatus described above may also include upstream blowback amount obtaining means for obtaining, based on the output of the airflow sensor, a blowback amount of exhaust gas that reaches an upstream portion of the intake system. Also, the intake air amount obtaining means may further include third intake air amount obtaining means for operating in place of the first and second intake air amount obtaining means when the blowback amount of exhaust gas obtained by the upstream blowback amount obtaining means is greater than another reference value that corresponds to the airflow sensor, and obtaining the intake air amount based on a speed and load ratio of the internal combustion engine.

With the control apparatus described above, the upstream blowback amount obtaining means is able to obtain, based on the output of the airflow sensor, the blowback amount of exhaust gas that reaches the upstream portion of the intake system. If this upstream blowback amount is greater than another reference value that corresponds to the airflow sensor, it is thought that there is error in both the output of the boost pressure sensor and the output of the airflow sensor. In this case, the third intake air amount obtaining means can obtain the intake air amount as accurately as possible based on the engine speed and load ratio, instead of using the outputs from the sensors.

Also, in the control apparatus described above, the blowback amount obtaining means may be configured to obtain an amplitude value of sensor output as the blowback amount of exhaust gas.

According to the control apparatus described above, the amplitude value when the outputs of the boost pressure sensor and the airflow sensor fluctuate (vibrate) due to blowback of the exhaust gas tends to increase as the blowback amount of the exhaust gas increases. Therefore, the blowback amount obtaining means is able to obtain the amplitude amounts of these sensor outputs as the blowback amount of the exhaust gas.

Also, the control apparatus described above may also include reading period varying means for setting a reading period of the output of the boost pressure sensor shorter as a pulsation of the boost pressure becomes larger, and setting the reading period in a valley of the pulsation.

According to the control apparatus described above, the reading period varying means is able to set the reading period of the output of the boost pressure sensor shorter as the pulsation of the boost pressure becomes larger, and set the reading period in a valley of the pulsation. As a result, the reading period of the sensor output can be set appropriately according to the magnitude of the pulsation, so the timing at which error occurs in the sensor outputs due to the effect of pulsation can be excluded from the reading period. Therefore, the boost pressure can be accurately detected by the boost pressure sensor even if there is blowback of the exhaust gas.

Furthermore, the control apparatus described above may also include reading period varying means for setting a reading period of the output of the boost pressure sensor shorter as the advance amount of the valve closing period of the exhaust valve becomes larger, and setting the reading period in a valley of the pulsation.

According to the control apparatus described above, the reading period varying means is able to set the reading period of the output of the boost pressure sensor shorter as the advance amount of the valve closing timing of the exhaust valve increases, and set this reading period in a valley of the pulsation. As a result, the reading period of the sensor output can be set appropriately according to the magnitude of the pulsation, so the timing at which error occurs in the sensor outputs due to the effect of pulsation can be excluded from the reading period. Therefore, the boost pressure can be accurately detected by the boost pressure sensor even if there is blowback of the exhaust gas.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG 1 is an overall block diagram of a system structure according to a first example embodiment of the invention;
FIG 2 is a characteristic line graph of a change in cylinder internal pressure when the phase of an exhaust valve has been advanced;
FIG 3 is a characteristic line graph of fluctuation in pressure at each portion of an intake system as a result of advancing the phase of the exhaust valve;
FIG 4 is a flowchart of control executed by an ECU according to the first example embodiment of the invention;
FIG. 5 is a flowchart of control executed by an ECU according to a second example embodiment of the invention;
FIG 6 is a graph showing the timing at which output from a boost pressure sensor is read according to a third example embodiment of the invention; and
FIG 7 is a flowchart of control executed by an ECU according to the third example embodiment of the invention.

### DETAILED DESCRIPTION OF EMBODIMENTS

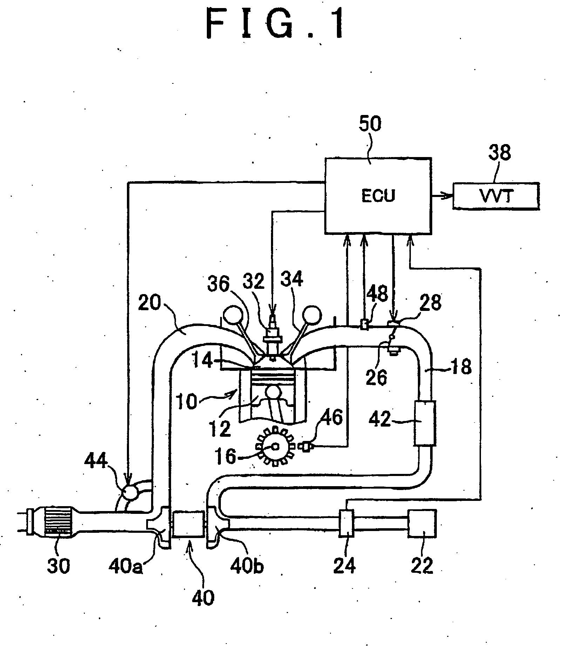

First, a first example embodiment of the invention will be described with reference to FIGS. 1 to 4. FIG. 1 is an overall block diagram of a system structure according to the first example embodiment of the invention. The system according to this example embodiment includes an internal combustion engine 10 that is a multiple cylinder diesel engine. Incidentally, in FIG 1, only one of a plurality of cylinders provided in the internal combustion engine 10 is shown. A combustion chamber 14 that expands and contracts in response to the reciprocating motion of a piston 12 is provided in each cylinder of the internal combustion engine 10. The piston 12 is connected to a crankshaft 16 that serves as an output shaft of the internal combustion engine 10. Also, the internal combustion engine 10 includes an intake passage 18 through which intake air is drawn into the cylinders, and an exhaust passage 20 through which exhaust gas is discharged from the cylinders. The intake passage 18 is connected to an intake port of each cylinder via an intake manifold that makes up a portion of the intake passage 18. The exhaust passage 20 is similarly connected to an exhaust port of each cylinder.

Also, an airflow sensor 24 that detects an intake air amount downstream of an air cleaner 22, and an electronically controlled throttle valve 26, are provided in the intake passage 18. The throttle valve 26 is driven to increase or decrease the intake air amount by a throttle motor 28 based on an accelerator operation amount and the like. Meanwhile, a catalyst 30 that purifies exhaust gas is provided in the exhaust passage 20. Also, a fuel injection valve 32 that injects fuel into the cylinder, an intake valve 34 that opens and closes the inside of the cylinder to and from the intake port, and an exhaust valve 36 that opens and closes the inside of the cylinder to and from the exhaust port, are provided for each cylinder.

Of the valves 34 and 36 described above, the phase of at least the exhaust valve 36 is variably set by VVT (Variable Valve Timing system) 38 provided in the internal combustion engine 10. The VVT 38 has a known structure such as that described in Japanese Patent Application Publication No. 2000-87769 (JP-A-2000-87769), for example. More specifically, first a timing pulley is provided on a camshaft, not shown, that drives the exhaust valve 36. This timing pulley is connected to the crankshaft 16 via a timing chain. Therefore, when rotation of the crankshaft 16 is transmitted to the camshaft via the timing chain and the timing pulley, the exhaust valve 36 opens and closes at a predetermined timing corresponding to the rotation angle of the camshaft. Meanwhile, the VVT 38 includes an actuator that rotates the camshaft and the timing pulley relative to one another, and is able to variably set the phase of the exhaust valve 36 according to the relative rotation angle of these.

Also, the internal combustion engine 10 is provided with a turbocharger 40 that supercharges the intake air using exhaust pressure. The turbocharger 40 includes a turbine 40a provided in the exhaust passage 20, and a compressor 40b provided in the intake passage 18 downstream of the airflow sensor 24. The turbine 40a and the compressor 40b are connected together. When the turbocharger 40 is operating, exhaust pressure is applied to the turbine 40a, causing it to rotate. The compressor 40b rotates together with the turbine 40a, thereby supercharging the intake air. An intercooler 42 that cools the intake air that has been supercharged by the compressor 40b is provided in the intake passage 18. Also, an electromagnetically driven waste gate valve 44 that bypasses the turbine 40a and through which exhaust gas passes is provided in the exhaust passage 20.

Moreover, the system according to this example embodiment is provided with a sensor system that includes a crank angle sensor 46 and a boost pressure sensor 48 and the like, and an ECU (Electronic Control Unit) 50 that controls the operating state of the internal combustion engine 10. The crank angle sensor 46 outputs a signal in synchronization with the rotation of the crankshaft 16, and the ECU 50 is able to detect the crank angle and the engine speed based on this output. The boost pressure sensor 48 is provided in the intake manifold in a position on the downstream side of the airflow sensor 24, and detects the boost pressure of the intake air supercharged by the compressor 40b.

In addition to the sensors 24, 46, and 48, the sensor system also includes various sensors necessary to control the vehicle and the internal combustion engine (such as a coolant temperature sensor that detects the coolant temperature of the internal combustion engine, an accelerator operation amount sensor that detects the accelerator operation amount, and an air-fuel ratio sensor that detects the exhaust air-fuel ratio, and the like). These sensors are connected to an input side of the ECU 50. Also, various actuators, including the throttle motor 28, the fuel injection valve 32, the VVT 38, and the waste gate valve 44 and the like are connected to an output side of the ECU 50.

Also, the ECU 50 controls the operating state of the internal combustion engine by driving the actuators while detecting the operating state of the internal combustion engine with the sensor system. More specifically, with fuel injection control, the ECU 50 calculates a fuel injection quantity based on an intake air amount obtained by intake air amount calculating method changing control, that will be described later, and a target air-fuel ratio and the like, and drives the fuel injection valve 32 based on the calculation result. Also, with boost pressure control, the ECU 50 feedback-controls the boost pressure by driving the waste gate valve 44 based on the boost pressure detected by the boost pressure sensor 48.

Meanwhile, with valve timing control of the exhaust valve 36 (hereinafter referred to as "exhaust valve control"), the ECU 50 advances the phase of the exhaust valve 36 using the VVT 38 in a specific operating state such as during startup, for example. As a result, the valve opening timing of the exhaust valve 36 becomes earlier than a reference valve closing timing, so high temperature exhaust gas immediately after combustion is made to flow through the exhaust passage 20. Incidentally, the reference valve closing timing is a valve closing timing during normal operation when exhaust valve control is not being executed, and is set beforehand. Therefore, exhaust valve control makes it possible to increase the exhaust temperature and thus promote warming up of the catalyst 30.

Three calculation methods are known for calculating the intake air amount in an internal combustion engine with a turbocharger. They are: (1) calculating the intake air amount based on the output of a boost pressure sensor, (2) calculating the intake air amount based on the output of an airflow sensor, and (3) calculating the intake air amount according to map data based on the engine speed and load ratio.

Method (1) described above involves calculating the intake air amount based on the output of the boost pressure sensor 48, assuming that the volumetric efficiency of the cylinders is constant. Method (2) described above involves calculating the intake air amount by correcting a response delay and the like in the output of the airflow sensor 24. Method (3) described above involves converting the relationships among the intake air amount, the engine speed, and the load ratio into map data, storing this map data in the ECU 50 in advance, and calculating the intake air amount based on this map data. Incidentally, with a diesel engine, the load ratio corresponds to the fuel injection quantity, so the map data may be also be made up of the relationships among the intake air amount, the engine speed, and the fuel injection quantity that have been converted into data form. When these methods are arranged in order from the highest calculated value accuracy and the best response, the order is: method (1) > method (2) > method (3). Therefore, it is basically preferable to calculate the intake air amount based on the output of the boost pressure sensor 48.

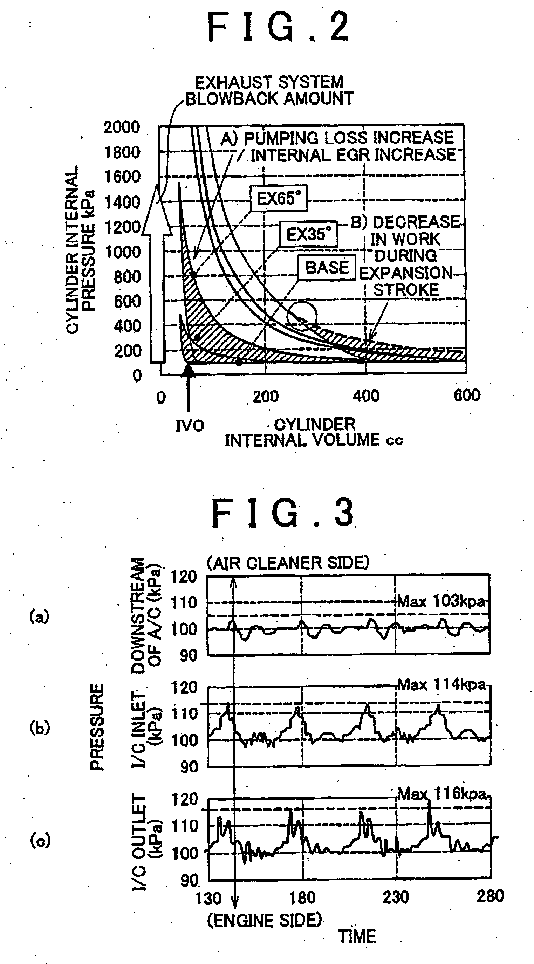

However, when exhaust valve control is executed, both the valve opening timing and the valve closing timing of the exhaust valve 36 are advanced, so the amount of exhaust gas blowback into the intake system increases. As a result, the output of the sensor may be affected. FIG 2 is a characteristic line graph of a change in cylinder internal pressure when the phase of the exhaust valve has been advanced. In the drawing, "EX65°" indicates a case in which the phase of the exhaust valve is advanced 65° CA, and "EX35°" similarly indicates a case in which the phase of the exhaust valve is advanced 35° CA. Also, "BASE" indicates a normal state in which the phase of the exhaust valve is not advanced, i.e., a state in which the valve closing timing of the exhaust valve is set to the reference valve closing timing described above. As shown in FIG. 2, when the phase of the exhaust valve (i.e., the valve closing timing) is advanced, the cylinder internal pressure when the exhaust valve opens (IVO) increases. As a result, the amount of blowback into the intake system increases, such that the outputs of the airflow sensor 24 and the boost pressure sensor 48 tend to fluctuate.

Therefore, in this example embodiment, intake air amount calculating method changing control that changes the calculation method of the intake air amount among methods (1) to (3) above according to the advance amount a of the valve closing timing of the exhaust valve 36 is executed. Here, the advance angle α is the difference between the actual valve closing timing of the exhaust valve set by exhaust valve control or the like and the reference valve closing timing described above, and is defined as the advance amount a = the valve closing timing - the reference valve closing timing, when the advance direction of the crank angle is positive.

In the intake air amount calculating method changing control, first, if the advance amount a of the exhaust valve is equal to or less than a predetermined advance reference value θ1 (θ1 ≥ α), method (1) described above is used, such that the intake air amount is obtained based on the output of the boost pressure sensor 48. The effect of exhaust gas blowback on the output of the boost pressure sensor 48 increases when the advance amount a of the exhaust valve is large, but the advance reference value θ1 is defined as the maximum value of the advance amount a at which this effect is just minimal. Therefore, when the advance amount a is equal to or less than the advance reference value θ1, the output of the boost pressure sensor 48 is considered to be normal (i.e., almost not affected by blowback), so the intake air amount can be quickly and accurately calculated based on the output of the boost pressure sensor 48 that is very responsive and has good intake air amount calculating accuracy. Also, the ECU 50 is able to feedback-control the amount of gas that flows into the cylinder based on the output of the boost pressure sensor 48.

Also, when the advance amount α is greater than the advance reference value θ1, the effect of blowback on the output of the boost pressure sensor 48 increases. FIG. 3 is a characteristic line graph of the fluctuation in pressure at each portion of an intake system as a result of advancing the phase of the exhaust valve. In the drawing, FIG. 3(a) shows the pressure fluctuation just downstream of the air cleaner (A / C), FIG 3(b) shows the pressure fluctuation at the inlet of the intercooler (I / C), and FIG 3(c) shows the pressure fluctuation at the outlet of the intercooler. As shown in FIG 3, at the position of the boost pressure sensor 48 (i.e., on the outlet side of the intercooler 42), the pressure fluctuation due to exhaust gas blowback is large. In contrast, at the position of the airflow sensor 24 that is farther upstream than the boost pressure sensor 48 (i.e., just downstream of the air cleaner 22), the pressure fluctuation due to blowback is comparatively small.

Therefore, if the advance amount a of the exhaust valve is greater than the advance reference value θ1 and equal to or less than a predetermined large advance reference value θ2 (θ2 ≥ a > θ1), method (2) above is used, such that the intake air amount is obtained based on the output of the airflow sensor 24. The large advance reference value θ2 is another reference value that is set at a value larger than the advance reference value θ1, and is defined as the maximum value of the advance amount a at which the effect of blowback on the output of the airflow sensor 24 is just minimal. Accordingly, if the advance amount a is θ2 ≥ a > θ1, there is error in the output of the boost pressure sensor 48, but the output of the airflow sensor 24 is thought to be normal. Thus, in this case, the intake air amount can be accurately calculated based on the output of the airflow sensor 24. As a result, the ECU 50 can feedback-control the amount of gas that flows into the cylinder based on the output of the airflow sensor 24.

As described above, the airflow sensor 24 is less affected by blowback as the position in which it is arranged is farther upstream of the boost pressure sensor 48. However, when the advance amount α increases to a certain amount, the output of the airflow sensor 24 also becomes affected by blowback. Therefore, if the advance amount a of the exhaust valve is greater than the large advance reference value θ2 (i.e., a > θ2), neither the output of the boost pressure sensor 48 nor the output of the airflow sensor 24 is used. Instead, method (3) described above is used. That is, in this case, the intake air amount is obtained by the map data based on the engine speed and the load ratio (i.e., the fuel injection quantity). According to this structure, even if the accuracy of the sensor outputs is low due to the effect of blowback, the intake air amount can be obtained as accurately as possible based on the map data.

Incidentally, the amount of exhaust gas blowback may be directly measured by testing or calculated from a theoretical calculation value of cylinder internal pressure in an adiabatic compression state, for example. Accordingly, the advance reference value θ1 and the large advance reference value θ2 described above may easily be determined by obtaining the relationship between the blowback amount and the advance amount a. For example, the advance reference value θ1 may be set at approximately 20° and the large advance reference amount value θ2 may be set at 40°.

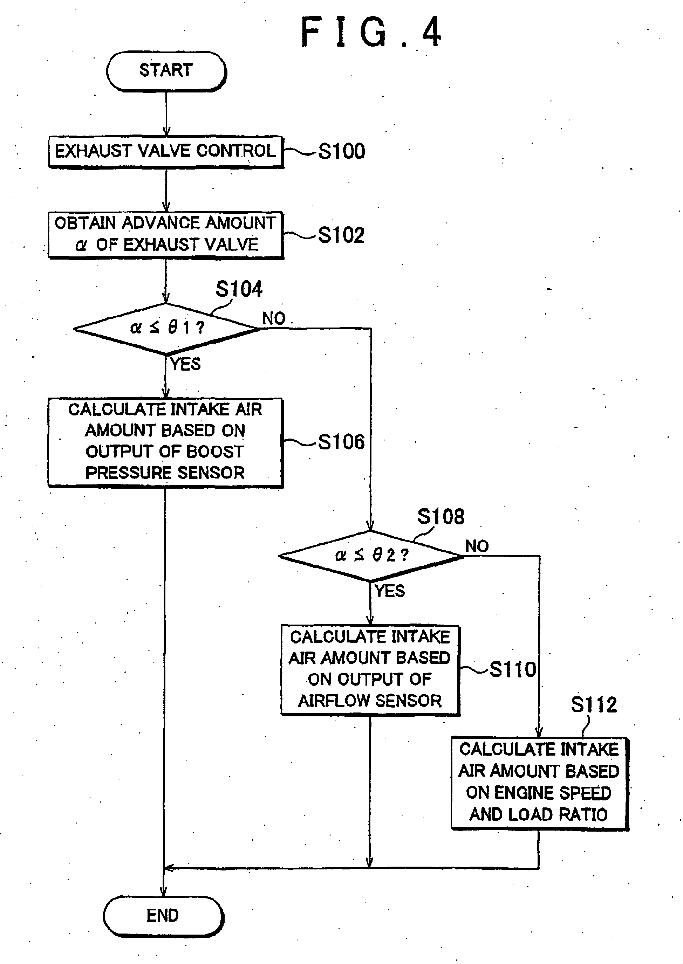

FIG. 4 is a flowchart illustrating control executed by the ECU according to the first example embodiment of the invention. The routine shown in FIG. 4 is repeatedly executed while the internal combustion engine is operating. In the routine in FIG 4, first, the exhaust valve control described above is executed based on the operating state of the internal combustion engine (step S100). Incidentally, in this example embodiment, to simplify the description, the exhaust valve control is described in FIG 4, but the invention is not limited to this flowchart. That is, the exhaust valve control may also be executed by another routine at a timing that is different from the timing at which the routine shown in FIG. 4 is executed.

In the next step, the advance amount a of the valve closing timing of the exhaust valve 36 set by the exhaust valve control is obtained (step S102). Then it is determined whether the advance amount a is equal to or less than the advance reference value θ1 (step S104). If the determination in step S104 is yes, then the intake air amount is calculated based on the output of the boost pressure sensor 48 (step S106). If, however, the determination in step S104 is no, then it is determined whether the advance amount a is equal to or less than the large advance reference value θ2 (step S108). If the determination in step S108 is yes, then the intake air amount is calculated based on the output of the airflow sensor 24 (step S110). If, however, the determination in step S108 is no, then the intake air amount is calculated based on the map data which includes the engine speed and the load ratio (step S112).

In this way, according to this example embodiment, the method used to calculate the intake air amount can be appropriately selected as the situation demands based on the advance amount a of the exhaust valve 36, so even if the amount of exhaust gas blowback increases or decreases, a calculation method that is as accurate as possible can be selected according to the situation. As a result, various controls that use the intake air amount can be accurately executed.

Incidentally, in the first example embodiment described above, step S100 in FIG. 4 is a specific example of the exhaust valve controlling means of the invention, and steps S104 and S106 are a specific example of the first intake air amount obtaining means of the invention. Also, steps S104 and S110 are a specific example of the second intake air amount obtaining means of the invention, and steps S108 and S112 are a specific example of the third intake air amount obtaining means of the invention.

Also, in the first example embodiment, valve control is executed by the VVT 38 that changes the phase of the exhaust valve 36. However, the invention is not limited to the VVT described above. That is, another type of variable valve timing mechanism capable of variably setting at least the valve closing timing of the exhaust valve 36 may be used. Also, with the invention, it is not absolutely necessary to advance the phase of the exhaust valve. For example, the invention may also be applied to control that advances only the valve closing timing, like control to make the exhaust valve close earlier.

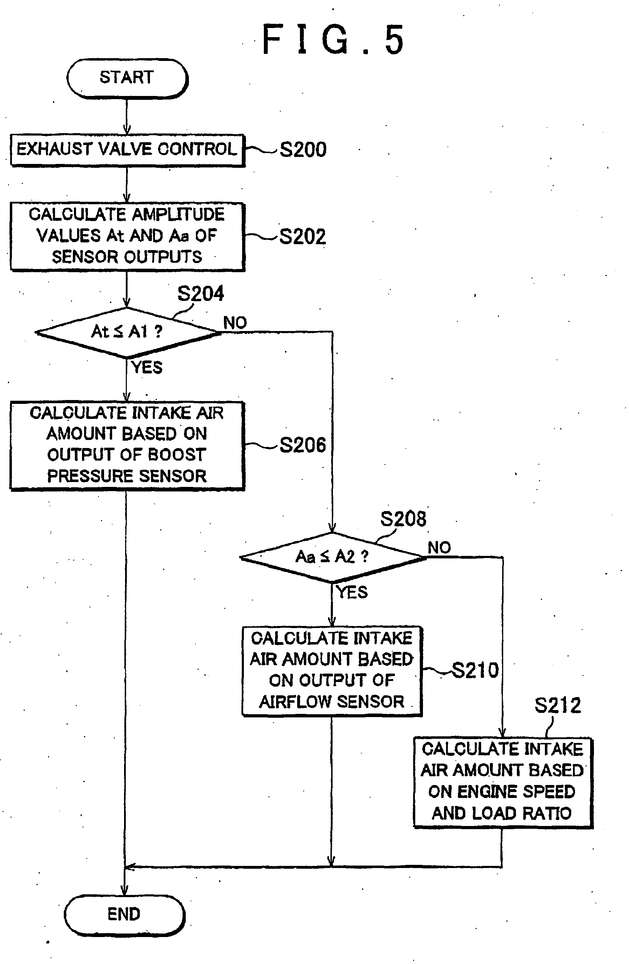

Next, a second example embodiment of the invention will be described with reference to FIG. 5. In this example embodiment, a system structure (FIG 1) similar to that in the first example embodiment is used. However, the content, i.e., the structure, of the control described below differs from that in the first example embodiment. Incidentally, structural elements in this example embodiment that are similar to structural elements in the first example embodiment described above will be denoted by like reference characters and descriptions of those structural elements will be omitted.

In this second example embodiment, the amount of exhaust gas blowback is obtained based on the outputs of the boost pressure sensor 48 and the airflow sensor 24, and the method for calculating the intake air amount is changed among methods (1) to (3) described above according to this blowback amount. The outputs of the airflow sensor 24 and the boost pressure sensor 48 cyclically fluctuate (vibrate) due to the exhaust gas blowback much like the waveform of the pressure fluctuation shown in FIG 3, but the amplitude values of these outputs increase as the amount of exhaust gas blowback increases. Therefore, with the intake air amount calculating method changing control, an amplitude value At of the output of the boost pressure sensor 48 and an amplitude value Aa of the output of the airflow sensor 24 are obtained as blowback amounts of the exhaust gas.

More specifically, the amplitude values At and Aa of the sensor outputs are calculated as peak values with a signal waveform or time-average values with a signal waveform or the like that are output from the sensors 24 and 28, for example. Also, the boost pressure sensor 48 is arranged farther downstream than the airflow sensor 24, so the amplitude value At of the boost pressure sensor 48 is calculated as the blowback amount of exhaust gas that reaches at least a downstream portion (i.e., the position of the boost pressure sensor) of the intake system. In contrast, the amplitude value Aa of the airflow sensor 24 is calculated as the blowback amount of exhaust gas that reaches an upstream portion (i.e., the position of the airflow sensor) of the intake system.

Also, in the intake air amount calculating method changing control, first, if the amplitude value At of the boost pressure sensor 48 is equal to or less than a predetermined amplitude reference value A1 (i.e., A1 ≥ At), then method (1) described above is used, such that the intake air amount is obtained based on the output of the boost pressure sensor 48. Here, the amplitude reference value A1 is set corresponding to the boost pressure sensor 48, and is defined as the maximum blowback amount (i.e., amplitude value) at which the intake air amount can accurately be calculated by the output of the boost pressure sensor 48, for example. More specifically, the amplitude reference value A1 is set by adding a predetermined allowance (margin) to the amplitude value when the effect of blowback is minimal, for example. Therefore, when the amplitude value At of the boost pressure sensor 48 is equal to or less than the amplitude reference value A1, the blowback amount that reaches the downstream portion of the intake system is small, so the output of the boost pressure sensor 48 is considered to be normal. Therefore, in this case, the intake air amount can accurately be calculated based on the output of the boost pressure sensor 48.

Also, the amplitude reference value A1 may also be set according to the maximum blowback amount at which a sufficient oxygen concentration in the cylinder can be ensured, even if there is blowback of the exhaust gas, for example. In this case, the amplitude reference value A1 is variably set according to the amount of fresh air in the cylinder and the EGR rate and the like, for example. According to this structure, if the amplitude value At of the boost pressure sensor 48 is equal to or less than the amplitude reference value A1, a good combustion state can be maintained in the cylinder even if there is blowback of the exhaust gas.

On the other hand, if the amplitude value At of the boost pressure sensor 48 is greater than the amplitude reference value A1, and the amplitude value Aa of the airflow sensor 24 is equal to or less than another amplitude reference value A2 (At > A1 and A2 ≥ Aa), method (2) described above is used, such that the intake air amount is obtained based on the output of the airflow sensor 24. Here, the amplitude reference value A2 is set separately from the amplitude reference value A1 corresponding to the airflow sensor 24, and is defined as the maximum amplitude value at which the intake air amount can be accurately calculated by the output of the airflow sensor 24, for example. Thus, if the amplitude value Aa is equal to or less than the amplitude reference value A2 (i.e., A2 ≥ Aa), the blowback amount that reaches the upstream portion of the intake system is thought not to be an amount that will affect the output of the airflow sensor 24. Therefore, in this case, the intake air amount can be accurately calculated based on the output of the airflow sensor 24.

Furthermore, if the amplitude value Aa of the airflow sensor 24 is greater than the amplitude reference value A2 (i.e., Aa > A2), it is thought that there is also error in the output of the airflow sensor 24, so neither the output of the airflow sensor 24 nor the output of the boost pressure sensor 48 is used. Instead, method (3) described above is used. That is, the intake air amount is obtained according to the map data based on the engine speed and the load ratio (i.e., the fuel injection quantity). According to this structure, even if the accuracy of the sensor outputs is low due to the effect of the blowback, the intake air amount can still be accurately calculated based on the map data. Incidentally, the amplitude reference values A1 and A2 described above may easily be determined based on the relationship between the amplitude values At and Aa and the blowback amount of the exhaust gas obtained from measurements by testing or from a theoretical calculation of the cylinder internal pressure or the like.

FIG 5 is a flowchart of control executed by an ECU according to the second example embodiment of the invention. The routine shown in FIG 5 is repeatedly executed while the internal combustion engine is operating. In the routine in FIG 5, first, exhaust valve control similar to that in the first example embodiment is executed (step S200). Incidentally, in this example embodiment, exhaust valve control is given only as an example, but the invention is not limited to exhaust valve control. That is, the invention may be applied to any appropriate control as long as it is control in which exhaust gas blowback occurs. Also, the control does not necessarily have to be executed during the routine shown in FIG 4. That is, the control may be executed with another routine.

In the next step, the outputs of the boost pressure sensor 48 and the airflow sensor 24 are obtained, and the amplitude values At and Aa of these sensor outputs are calculated (step S202). Then it is determined whether the amplitude value At of the boost pressure sensor 48 is equal to or less than the amplitude reference value A1 (step S204). If the determination in step S204 is yes, then the intake air amount is calculated based on the output of the boost pressure sensor 48 (step S206). If, on the other hand, the determination in step S204 is no, then it is determined whether the amplitude value Aa of the airflow sensor 24 is equal to or less than the amplitude reference value A2 (step S208). If the determination in step S208 is yes, then the intake air amount is calculated based on the output of the airflow sensor 24 (step S210). If, on the other hand, the determination in step S208 is no, then the intake air amount is calculated based on the map data which includes the engine speed and the load ratio (step S212).

Operation and effects similar to those obtained by the first example embodiment described above can also be obtained by this example embodiment structured as described above. That is, the method used to calculate the intake air amount can be appropriately selected as the situation demands according to the blowback amount of the exhaust gas (i.e., the amplitude values At and Aa of the sensor outputs). Also in this example embodiment, the method for calculating the intake air amount is selected based on the blowback amount of the exhaust gas, so the invention may also be applied to any appropriate system in which blowback of the exhaust gas occurs due to something other than exhaust valve control, for example. As a result, the application range of the invention can be expanded.

Incidentally, in this second example embodiment, step S202 in FIG 5 is a specific example of the blowback amount obtaining means and the upstream side blowback amount obtaining means of the invention. Also, steps S204 and S206 are a specific example of the first intake air amount obtaining means of the invention, and steps S204 and S210 are a specific example of the second intake air amount obtaining means of the invention. Moreover, steps S208 and S212 are a specific example of the third intake air amount obtaining means of the invention.

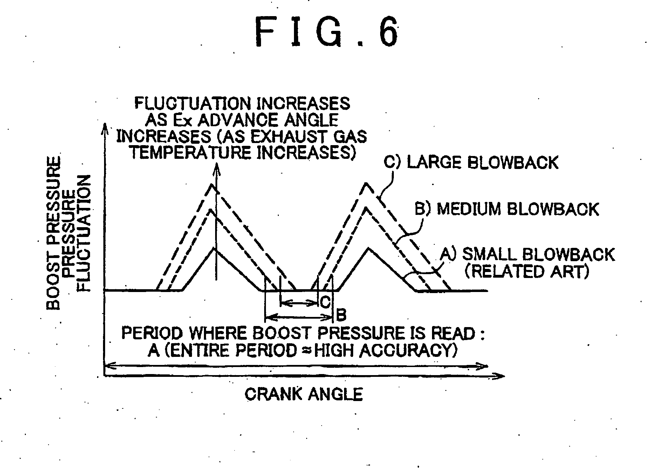

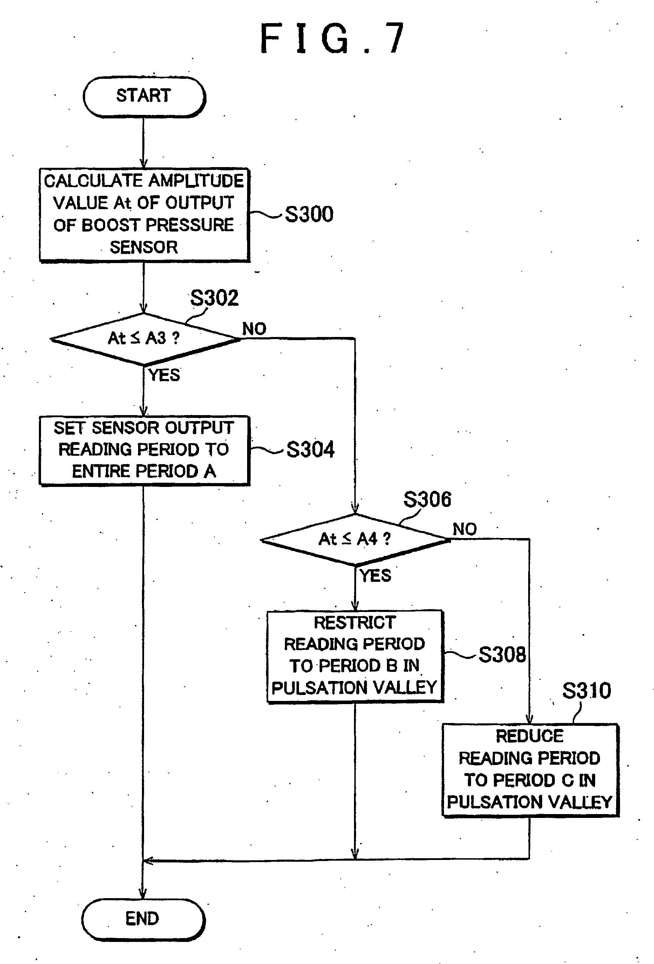

Next, a third example embodiment of the invention will be described with reference to FIGS. 6 and 7. In this example embodiment, a system structure (FIG. 1) similar to that in the first example embodiment is used. However, the content, i.e., the structure, of the control described below differs from that in the first example embodiment. Incidentally, structural elements in this example embodiment that are similar to structural elements in the first example embodiment described above will be denoted by like reference characters and descriptions of those structural elements will be omitted.

FIG is a graph showing the timing at which output from a boost pressure sensor is read according to the third example embodiment of the invention. As shown in the drawing, when the pulsation of the boost pressure (i.e., the blowback of the exhaust gas) is small, the output of the boost pressure sensor 48 is preferably read throughout the entire period A of the pulsation cycle, and the time-average of the read values is used as the sensor output. As a result, the effects of noise and the like on the sensor output can be eliminated. However, if the sensor output is read at a period where pulsation is occurring when the pulsation of the boost pressure is large, the boost pressure that has been increased by the blowback pressure will be read, so there will be error in the read value.

Therefore, in this example embodiment, reading period varying control that sets the period during which the output of the boost pressure sensor 48 is read shorter as the pulsation of the boost pressure increases, and sets the reading period to the valley of the pulsation is executed. This reading period varying control is executed in combination with one of the intake air amount calculating method changing controls described in the first and second example embodiments described above. Also, the amplitude value At of the boost pressure sensor 48 obtained by a method similar to that in the second example embodiment is used as a parameter to determine the magnitude of the pulsation. That is, in this example embodiment, the sensor output reading period is set shorter as the amplitude value At of the boost pressure sensor 48 increases, and this reading period is set to the valley of the pulsation.

In the reading period varying control, first, if the amplitude value At of the boost pressure sensor 48 is equal to or less than a predetermined reference value A3 (A3 ≥ At), the sensor output reading period is set to the entire period A described above, and the time-average of the read value of the entire period A is used as the final sensor output. Here, the reference value A3 is defined as the maximum amplitude value (i.e., the maximum pulsation level) at which the time-average value of the entire period can be used as the sensor output. That is, when the amplitude value At is equal to or less than the reference value A3, it is thought that the effect of the pulsation (i.e., the exhaust gas blowback) of the boost pressure on the sensor output is minimal, so the time-average value of the sensor output of the entire period A can be used as the final output.

Also, if the amplitude value At is greater than the reference value A3 and the equal to or less than another reference value A4 that is set at a value larger than the reference value A3 (i.e., A4 ≥ At > A3), then the sensor output reading period is restricted to a predetermined period B that is positioned in the valley of the pulsation, as shown in FIG 6. Furthermore, if the amplitude value At is greater than the other reference value A4 (i.e., At > A4), the sensor output reading period is shortened to period C that is narrower than period B in the valley of the pulsation. Here, when pulsations of magnitudes corresponding to the reference values A3 and A4 occur, the reference values A3 and A4 and the periods B and C are set to values that enable the periods B and C to be provided in the valley of the pulsation.

As a result, the sensor output reading period can be appropriately set according to the magnitude of the pulsation, so the timing at which error occurs in the sensor outputs due to the effect of pulsation can be excluded from the reading period. Therefore, the boost pressure can be accurately detected, by the boost pressure sensor 48 even if there is blowback of the exhaust gas.

Incidentally, in the structure described above, the amplitude value At of the boost pressure sensor 48 is used as the parameter that determines the magnitude of the pulsation. However, the invention is not limited to this. That is, the advance amount a of the exhaust valve 36 described in the first example embodiment, for example, may also be used as the parameter. That is, in the invention, the reading period of the output of the boost pressure sensor 48 may be set shorter as the advance amount a of the exhaust valve 36 increases, and this reading period may be set to a valley of the pulsation. More specifically, if the advance amount a is equal to or less than a predetermined reference value A3', the sensor output reading period is set to the entire period A. Also, if the advance amount α is greater than the reference value A3' and equal to or less than another reference value A4', the reading period is set to the period B, and if the advance amount a is greater than the reference value A4', the reading period is set to the period C. Incidentally, the reference values A3' and A4' are set according to references similar to the reference values A3 and A4 described above. With this structure as well, the sensor output reading period can be appropriately set according to the magnitude of the pulsation.

FIG. 7 is a flowchart of control executed by an ECU according to the third example embodiment of the invention. The routine in FIG 7 is repeatedly executed in parallel with one of the routines (FIG 4 or 5) described in the first and second example embodiments, while the internal combustion engine-is operating. In the routine shown in FIG 7, first, the output of the boost pressure sensor 48 is obtained and the amplitude value At of that output is calculated (step S300).

Then it is determined whether the amplitude value At is equal to or less than the amplitude reference value A3 (step S302). If it is determined in step S302 that the amplitude value At is equal to or less than the amplitude reference value A3, the sensor output reading period is set to the entire period A (step S304). If, however, it is determined in step S302 that the amplitude value At is not equal to or less than the amplitude reference value A3, then it is determined whether the amplitude value At is equal to or less than the amplitude reference value A4 (step S306). If it is determined in step S306 that the amplitude value At is equal to or less than the amplitude reference value A4, then the sensor output reading period is restricted to period B (step S308). If, however, is determined in step S306 that the amplitude value At is not equal to or less than the amplitude reference value A4, then the sensor output reading period is shortened to period C (step S310).

Incidentally, in the third example embodiment described above, steps S302 to S310 in FIG 7 are a specific example of the reading period varying means of the invention. Also, in this invention, the first or the second example embodiment may be combined with the third example embodiment.

## Claims

1. A control apparatus for an internal combustion engine that includes an airflow sensor (24) that detects an intake air amount of an internal combustion engine (10), a turbocharger (40) that supercharges intake air using exhaust pressure of the internal combustion engine (10), a boost pressure sensor (48) that is arranged downstream of the airflow sensor (24) and detects a boost pressure of the intake air supercharged by the turbocharger (40), and operating state detecting/controlling means for detecting an operating state of the internal combustion engine (10) and controls the internal combustion engine (10), wherein the control apparatus comprises:
intake air amount obtaining means for obtaining the intake air amount based on output of the boost pressure sensor (48) or output of the airflow sensor (24), based on a comparison of a detection value indicative of a state of the internal combustion engine (10) and a predetermined reference value;
and is **characterized in that** the operating state detecting/controlling means includes exhaust valve controlling means (S100) for advancing a valve closing timing of an exhaust valve (36) more than a reference valve closing timing according to the operating state of the internal combustion engine (10); and the intake air amount obtaining means includes first intake air amount obtaining means (S104, S106) for obtaining the intake air amount based on the output of the boost pressure sensor (48) when an advance amount (α) of the valve closing timing of the exhaust valve (36) is equal to or less than a predetermined reference value (θ₁), and second intake air amount obtaining means (S104, S110) for obtaining the intake air amount based on the output of the airflow sensor (24) when the advance amount (α) of the valve closing timing of the exhaust valve (36) is greater than the reference value (θ₁).

2. The control apparatus according to claim 1, **characterized in that** the intake air amount obtaining means further includes third intake air amount obtaining means (S108, S112) for operating in place of the first and second intake air amount obtaining means when the advance amount (α) of the valve closing timing of the exhaust valve (36) exceeds another reference value (θ₂) that is set at a value larger than the reference value (θ₁), and obtaining the intake air amount based on a speed and load ratio of the internal combustion engine (10).

3. The control apparatus according to any one of claims 1 or 2, **characterized by** further comprising:
reading period varying means for setting a reading period of the output of the boost pressure sensor (48) shorter as the advance amount (α) of the valve closing period of the exhaust valve (36) becomes larger, and setting the reading period in a valley of the pulsation.

4. A control apparatus for an internal combustion engine that includes an airflow sensor (24) that detects an intake air amount of an internal combustion engine (10), a turbocharger (40) that supercharges intake air using exhaust pressure of the internal combustion engine (10), a boost pressure sensor (48) that is arranged downstream of the airflow sensor (24) and detects a boost pressure of the intake air supercharged by the turbocharger (40), and operating state detecting/controlling means for detecting an operating state of the internal combustion engine (10) and controls the internal combustion engine (10), wherein the control apparatus comprises:
intake air amount obtaining means for obtaining the intake air amount based on output of the boost pressure sensor (48) or output of the airflow sensor (24), based on a comparison of a detection value indicative of a state of the internal combustion engine (10) and a predetermined reference value; and
is **characterized in that** the operating state detecting/controlling means includes blowback amount obtaining means (S202) for obtaining, based on the output of the boost pressure sensor (48), a blowback amount of exhaust gas that is blown back to an intake system of the internal combustion engine (10); and the intake air amount obtaining means includes first intake air amount obtaining means (S204, S206) for obtaining the intake air amount based on the output of the boost pressure sensor (48) when the blowback amount (At) of exhaust gas is equal to or less than a predetermined reference value (A₁), and second intake air amount obtaining means (S204, S210) for obtaining the intake air amount based on the output of the airflow sensor (24) when the blowback amount of exhaust gas is greater than the reference value (A₁).

5. The control apparatus according to claim 4, **characterized by** further comprising:
upstream blowback amount obtaining means for obtaining, based on the output of the airflow sensor (24), a blowback amount (Aₐ) of exhaust gas that reaches an upstream portion of the intake system,
wherein the intake air amount obtaining means further includes third intake air amount obtaining means (S208, S212) for operating in place of the first and second intake air amount obtaining means when the blowback amount of exhaust gas obtained by the upstream blowback amount obtaining means is greater than another reference value (A₂) that corresponds to the airflow sensor (24), and obtaining the intake air amount based on a speed and load ratio of the internal combustion engine (10).

6. The control apparatus according to claim 4 or 5, **characterized in that** the blowback amount obtaining means (S202) is configured to obtain an amplitude value (Aₜ, Aₐ) of sensor output as the blowback amount of exhaust gas.

7. The control apparatus according to any one of claims 1 through 6, **characterized by** further comprising:
reading period varying means for setting a reading period of the output of the boost pressure sensor (48) shorter as a pulsation of the boost pressure becomes larger, and setting the reading period in a valley of the pulsation.

8. A method for controlling an internal combustion engine that includes an airflow sensor (24) that detects an intake air amount of an internal combustion engine (10), a turbocharger (40) that supercharges intake air using exhaust pressure of the internal combustion engine (10), a boost pressure sensor (48) that is arranged downstream of the airflow sensor (24) and detects a boost pressure of the intake air supercharged by the turbocharger (40), and operating state detecting/controlling means for detecting an operating state of the internal combustion engine (10), said operating state detecting/controlling means including exhaust valve controlling means (S100) for advancing a valve closing timing of an exhaust valve (36) more than a reference valve closing timing according to the operating state of the internal combustion engine (10), wherein a first intake air amount obtaining means (S104, S106) obtains the intake air amount based on the output of the boost pressure sensor (48) when an advance amount (α) of the valve closing timing of the exhaust valve (36) is equal to or less than a predetermined reference value (θ₁), and second intake air amount obtaining means (S104, S110) obtains the intake air amount based on the output of the airflow sensor (24) when the advance amount (α) of the valve closing timing of the exhaust valve (36) is greater than the reference value (θ₁), so that the intake air amount obtaining means obtain the intake air amount based on output of the boost pressure sensor (48) or output of the airflow sensor (24), based on a comparison of a detection value indicative of a state of the internal combustion engine (10) and a predetermined reference value.

9. A method for controlling an internal combustion engine that includes an airflow sensor (24) that detects an intake air amount of an internal combustion engine (10), a turbocharger (40) that supercharges intake air using exhaust pressure of the internal combustion engine (10), a boost pressure sensor (48) that is arranged downstream of the airflow sensor (24) and detects a boost pressure of the intake air supercharged by the turbocharger (40), and operating state detecting/controlling means for detecting an operating state of the internal combustion engine (10) and including blowback amount obtaining means (S202) obtaining, based on the output of the boost pressure sensor (48), a blowback amount of exhaust gas that is blown back to an intake system of the internal combustion engine (10), wherein a first intake air amount obtaining means (S204, S206) obtains the intake air amount based on the output of the boost pressure sensor (48) when the blowback amount (Aₜ) of exhaust gas is equal to or less than a predetermined reference value (A₁), and a second intake air amount obtaining means (S204, S210) obtains the intake air amount based on the output of the airflow sensor (24) when the blowback amount of exhaust gas is greater than the reference value (A₁), so that the intake air amount obtaining means obtain the intake air amount based on output of the boost pressure sensor (48) or output of the airflow sensor (24), based on a comparison of a detection value indicative of a state of the internal combustion engine (10) and a predetermined reference value.

## Patentansprüche

1. Steuervorrichtung für einen Verbrennungsmotor, der einen Luftflußsensor (24), der eine Ansaugluftmenge eines Verbrennungsmotors (10) detektiert, einen Turbolader (40), der Ansaugluft unter Verwendung von Abgasdruck des Verbrennungsmotors (10) auflädt, einen Ladedrucksensor (48), der stromabwärts des Luftflußsensors angeordnet ist und einen Ladedruck der durch den Turbolader (40) aufgeladenen Ansaugluft detektiert, und Betriebszustandsdetektions-/-steuermittel zum Detektieren eines Betriebszustandes des Verbrennungsmotors (10) und zum Steuern des Verbrennungsmotors (10) umfaßt, wobei die Steuervorrichtung umfaßt:
Ansaugluftmengengewinnungsmittel zum Gewinnen der Ansaugluftmenge basierend auf einer Ausgabe des Ladedrucksensors (48) oder einer Ausgabe des Luftflußsensors (24), basierend auf einem Vergleich eines Detektionswertes, der einen Zustand des Verbrennungsmotors (10) angibt, und eines vorbestimmten Referenzwertes,
und **dadurch gekennzeichnet ist, daß** die Betriebszustandsdetektions-/- steuermittel Abgasventilsteuermittel (S100) zum Vorverlegen eines Ventilschließzeitpunktes eines Abgasventils (36) über einen Referenzventilschließzeitpunkt hinaus gemäß dem Betriebszustand des Verbrennungsmotors (10) umfassen, und die Ansaugluftmengengewinnungsmittel erste Ansaugluftmengengewinnungsmittel (S104, S106) zum Gewinnen der Ansaugluftmenge basierend auf der Ausgabe des Ladedrucksensors (48), wenn eine Vorverlegemenge (α) des Ventilschließzeitpunktes des Abgasventils (36) gleich einem oder kleiner als ein vorbestimmten/r Referenzwert (θ₁) ist, und zweite Ansaugluftmengengewinnungsmittel (S104, S110) zum Gewinnen der Ansaugluftmenge basierend auf der Ausgabe des Luftflußsensors (24), wenn eine Vorverlegemenge (α) des Ventilschließzeitpunktes des Abgasventils (36) größer als der Referenzwert (θ₁) ist, umfassen.

2. Steuervorrichtung nach Anspruch 1, **dadurch gekennzeichnet, daß** die Ansaugluftmengengewinnungsmittel ferner dritte Ansaugluftmengengewinnungsmittel (S108, S112) zum Betrieb anstelle der ersten und zweiten Ansaugluftmengengewinnungsmittel umfassen, wenn die Vorverlegemenge (α) des Ventilschließzeitpunktes des Abgasventils (36) einen anderen Referenzwert (θ₂) überschreitet, der als ein Wert eingestellt ist, der größer als der Referenzwert (θ₁) ist, und daß die Ansaugluftmenge basierend auf einem Drehzahl- und Ladeverhältnis des Verbrennungsmotors (10) gewonnen wird.

3. Steuervorrichtung nach einem der Ansprüche 1 oder 2, **dadurch gekennzeichnet, daß** sie ferner umfaßt:
Lesezeitraumvariationsmittel zum Einstellen eines kürzeren Lesezeitraums der Ausgabe des Ladedrucksensors (48), wenn die Vorverlegemenge (α) des Ventilschließzeitpunktes des Abgasventils (36) größer wird, und Einstellen des Lesezeitraums in einem Pulsationstal.

4. Steuervorrichtung für einen Verbrennungsmotor, der einen Luftflußsensor (24), der eine Ansaugluftmenge eines Verbrennungsmotors (10) detektiert, einen Turbolader (40), der Ansaugluft unter Verwendung von Abgasdruck des Verbrennungsmotors (10) auflädt, einen Ladedrucksensor (48), der stromabwärts des Luftflußsensors angeordnet ist und einen Ladedruck der durch den Turbolader (40) aufgeladenen Ansaugluft detektiert, und Betriebszustandsdetektions-/-steuermittel zum Detektieren eines Betriebszustandes des Verbrennungsmotors (10) und zum Steuern des Verbrennungsmotors (10) umfaßt, wobei die Steuervorrichtung umfaßt:
Ansaugluftmengengewinnungsmittel zum Gewinnen der Ansaugluftmenge basierend auf einer Ausgabe des Ladedrucksensors (48) oder einer Ausgabe des Luftflußsensors (24), basierend auf einem Vergleich eines Detektionswertes, der einen Zustand des Verbrennungsmotors (10) angibt, und eines vorbestimmten Referenzwertes, und
**dadurch gekennzeichnet ist, daß** die Betriebszustandsdetektions-/-steuermittel Rückstoßmengengewinnungsmittel (S202) zum Gewinnen, basierend auf der Ausgabe des Ladedrucksensors (48), einer Abgasrückstoßmenge, die zurück zu einem Ansaugsystem des Verbrennungsmotors (10) geblasen wird, umfassen, und die Ansaugluftmengengewinnungsmittel erste Ansaugluftmengengewinnungsmittel (S204, S206) zum Gewinnen der Ansaugluftmenge basierend auf der Ausgabe des Ladedrucksensors (48), wenn die Abgasrückstoßmenge (Aₜ) gleich einem oder kleiner als ein vorbestimmten/r Referenzwert (A₁) ist, und zweite Ansaugluftmengengewinnungsmittel (S204, S210) zum Gewinnen der Ansaugluftmenge basierend auf der Ausgabe des Luftflußsensors (24), wenn die Abgasrückstoßmenge größer als der Referenzwert (A₁) ist, umfassen.

5. Steuervorrichtung nach Anspruch 4, **dadurch gekennzeichnet, daß** sie ferner umfaßt:
vorgeschaltete Rückstoßmengengewinnungsmittel zum Gewinnen, basierend auf der Ausgabe des Luftflußsensors (24), einer Abgasrückstoßmenge (Aₐ), die einen vorgeschalteten Abschnitt des Ansaugsystems erreicht,
wobei die Ansaugluftmengengewinnungsmittel ferner dritte Ansaugluftmengengewinnungsmittel (S208, S212) zum Betrieb anstelle der ersten und zweiten Ansaugluftmengengewinnungsmittel umfassen, wenn die Abgasrückstoßmenge, die durch die vorgeschalteten Rückstoßmengengewinnungsmittel gewonnen werden, größer als ein anderer Referenzwert (A₂) ist, der dem Luftflußsensor (24) entspricht, und daß die Ansaugluftmenge basierend auf einem Drehzahl- und Ladeverhältnis des Verbrennungsmotors (10) gewonnen wird.

6. Steuervorrichtung nach Anspruch 4 oder 5, **dadurch gekennzeichnet, daß** die Rückstoßmengengewinnungsmittel (S202) dazu ausgelegt sind, einen Amplitudenwert (Aₜ, Aₐ) einer Sensorausgabe als die Abgasrückstoßmenge zu gewinnen.

7. Steuervorrichtung nach einem der Ansprüche 1 bis 6, **dadurch gekennzeichnet, daß** sie ferner umfaßt:
Lesezeitraumvariationsmittel zum Einstellen eines kürzeren Lesezeitraums der Ausgabe des Ladedrucksensors (48), wenn eine Pulsation des Ladedrucks größer wird, und Einstellen des Lesezeitraums in einem Pulsationstal.

8. Verfahren zum Steuern eines Verbrennungsmotors, der einen Luftflußsensor (24), der eine Ansaugluftmenge eines Verbrennungsmotors (10) detektiert, einen Turbolader (40), der Ansaugluft unter Verwendung von Abgasdruck des Verbrennungsmotors (10) auflädt, einen Ladedrucksensor (48), der stromabwärts des Luftflußsensors angeordnet ist und einen Ladedruck der durch den Turbolader (40) aufgeladenen Ansaugluft detektiert, und Betriebszustandsdetektions-/-steuermittel zum Detektieren eines Betriebszustandes des Verbrennungsmotors (10) umfaßt, wobei die Betriebszustandsdetektions-/-steuermittel Abgasventilsteuermittel (S100) zum Vorverlegen eines Ventilschließzeitpunktes eines Abgasventils (36) über einen Referenzventilschließzeitpunkt hinaus gemäß dem Betriebszustandes des Verbrennungsmotors (10) umfassen, wobei erste Ansaugluftmengengewinnungsmittel (S104, S106) die Ansaugluftmenge basierend auf der Ausgabe des Ladedrucksensors (48) gewinnen, wenn eine Vorverlegemenge (α) des Ventilschließzeitpunktes des Abgasventils (36) gleich einem oder kleiner als ein vorbestimmten/r Referenzwert (θ₁) ist, und zweite Ansaugluftmengengewinnungsmittel (S104, S110) die Ansaugluftmenge basierend auf der Ausgabe des Luftflußsensors (24) gewinnen, wenn eine Vorverlegemenge (α) des Ventilschließzeitpunktes des Abgasventils (36) größer als der Referenzwert (θ₁) ist, so daß die Ansaugluftmengengewinnungsmittel die Ansaugluftmenge basierend auf einer Ausgabe des Ladedrucksensors (48) oder des Luftflußsensors (24) gewinnen, basierend auf einem Vergleich eines Detektionswertes, der einen Zustand des Verbrennungsmotors (10) angibt, und eines vorbestimmten Referenzwertes.

9. Verfahren zum Steuern eines Verbrennungsmotors, der einen Luftflußsensor (24), der eine Ansaugluftmenge eines Verbrennungsmotors (10) detektiert, einen Turbolader (40), der Ansaugluft unter Verwendung von Abgasdruck des Verbrennungsmotors (10) auflädt, einen Ladedrucksensor (48), der stromabwärts des Luftflußsensors angeordnet ist und einen Ladedruck der durch den Turbolader (40) aufgeladenen Ansaugluft detektiert, und Betriebszustandsdetektions-/-steuermittel zum Detektieren eines Betriebszustandes des Verbrennungsmotors (10) umfaßt, die Rückstoßmengengewinnungsmittel (S202) umfassen, die basierend auf der Ausgabe des Ladedrucksensors (48) eine Abgasrückstoßmenge, die zurück zu einem Ansaugsystem des Verbrennungsmotors (10) geblasen wird, gewinnen, wobei erste Ansaugluftmengengewinnungsmittel (S204, S206) die Ansaugluftmenge basierend auf der Ausgabe des Ladedrucksensors (48) gewinnen, wenn die Abgasrückstoßmenge (Aₜ) gleich einem oder kleiner als ein vorbestimmten/r Referenzwert (A₁) ist, und zweite Ansaugluftmengengewinnungsmittel (S204, S210) die Ansaugluftmenge basierend auf der Ausgabe des Luftflußsensors (24) gewinnen, wenn die Abgasrückstoßmenge größer als der Referenzwert (A₁) ist, so daß die Ansaugluftmengengewinnungsmittel die Ansaugluftmenge basierend auf einer Ausgabe des Ladedrucksensors (48) oder einer Ausgabe des Luftflußsensors (24) gewinnen, basierend auf einem Vergleich eines Detektionswertes, der einen Zustand des Verbrennungsmotors (10) angibt, und eines vorbestimmten Referenzwertes.

## Revendications

1. Appareil de commande pour un moteur à combustion interne qui comprend un capteur d'écoulement d'air (24) qui détecte une quantité d'air d'admission d'un moteur à combustion interne (10), un turbocompresseur (40) qui suralimente l'air d'admission à l'aide de la pression d'échappement du moteur à combustion interne (10), un capteur de pression de suralimentation (48) qui est agencé en aval du capteur d'écoulement d'air (24) et détecte une pression de suralimentation de l'air d'admission suralimenté par le turbocompresseur (40), et des moyens de détection/commande d'état de fonctionnement pour détecter un état de fonctionnement du moteur à combustion interne (10) et commander le moteur à combustion interne (10), dans lequel l'appareil de commande comprend :
des moyens d'obtention de quantité d'air d'admission pour obtenir la quantité d'air d'admission en fonction d'une grandeur de sortie du capteur de pression de suralimentation (48) ou d'une grandeur de sortie du capteur d'écoulement d'air (24), basé sur une comparaison de la valeur de détection qui indique un état du moteur à combustion interne (10) et d'une valeur de référence prédéterminée ;
et est **caractérisé en ce que** les moyens de détection/commande d'état de fonctionnement comprennent des moyens de commande de soupape d'échappement (S100) pour avancer davantage une synchronisation de fermeture de soupape d'une soupape d'échappement (36) qu'une synchronisation de fermeture de soupape de référence selon l'état de fonctionnement du moteur à combustion interne (10) ; et les moyens d'obtention de quantité d'air d'admission comprennent des premiers moyens d'obtention de quantité d'air d'admission (S104, S106) pour obtenir la quantité d'air d'admission en fonction d'une grandeur de sortie du capteur de pression de suralimentation (48) lorsque la quantité d'avance (α) de la synchronisation de fermeture de soupape de la soupape d'échappement (36) est égale ou inférieure à une valeur de référence prédéterminée (θ₁), et des deuxièmes moyens d'obtention de quantité d'air d'admission (S104, S110) pour obtenir la quantité d'air d'admission en fonction d'une grandeur de sortie du capteur d'écoulement d'air (24) lorsque la quantité d'avance (α) de la synchronisation de fermeture de soupape de la soupape d'échappement (36) est supérieure à la valeur de référence (8₁).

2. Appareil de commande selon la revendication 1, **caractérisé en ce que** les moyens d'obtention de quantité d'air d'admission comprennent en outre des troisièmes moyens d'obtention de quantité d'air d'admission (S108, S112) pour fonctionner à la place des premiers et deuxièmes moyens d'obtention de quantité d'air d'admission lorsque la quantité d'avance (α) de la synchronisation de fermeture de soupape de la soupape d'échappement (36) dépasse une autre valeur de référence (θ₂) qui est déterminée comme étant une valeur supérieure à la valeur de référence (θ₁), et pour obtenir la quantité d'air d'admission en fonction d'un rapport de vitesse et charge du moteur à combustion interne (10).

3. Appareil de commande selon l'une quelconque des revendications 1 ou 2, **caractérisé en outre en ce qu'**il comprend :
des moyens de variation de période de lecture pour établir une période de lecture du résultat du capteur de pression de suralimentation (48) plus courte au fur et à mesure que la quantité d'avance (θ) de la période de fermeture de soupape de la soupape d'échappement (36) devient plus importante, et déterminer la période de lecture dans un creux de la pulsation.

4. Appareil de commande pour un moteur à combustion interne qui comprend un capteur d'écoulement d'air (24) qui détecte une quantité d'air d'admission d'un moteur à combustion interne (10), un turbocompresseur (40) qui suralimente l'air d'admission à l'aide de la pression d'échappement du moteur à combustion interne (10), un capteur de pression de suralimentation (48) qui est agencé en aval du capteur d'écoulement d'air (24) et détecte une pression de suralimentation de l'air d'admission suralimenté par le turbocompresseur (40), et des moyens de détection/commande d'état de fonctionnement pour détecter un état de fonctionnement du moteur à combustion interne (10) et commande le moteur à combustion interne (10), dans lequel l'appareil de commande comprend :
des moyens d'obtention de quantité d'air d'admission pour obtenir la quantité d'air d'admission en fonction d'une grandeur de sortie du capteur de pression de suralimentation (48) ou d'une grandeur de sortie du capteur d'écoulement d'air (24), basé sur une comparaison d'une valeur de détection indiquant un état du moteur à combustion interne (10) et d'une valeur de référence prédéterminée ; et
est **caractérisé en ce que** les moyens de détection/commande d'état de fonctionnement comprennent des moyens d'obtention de quantité de refoulement (S202) pour obvenir, en fonction d'une grandeur de sortie du capteur de pression de suralimentation (48), une quantité de refoulement du gaz d'échappement qui est refoulée vers un système d'admission du moteur à combustion interne (10) ; et les moyens d'obtention de quantité d'air d'admission comprennent des premiers moyens d'obtention de quantité d'air d'admission (S204, S206) pour obtenir la quantité d'air d'admission en fonction d'une grandeur de sortie du capteur de pression de suralimentation (48) lorsque la quantité de refoulement (Aₜ) du gaz d'échappement est égale ou inférieure à une valeur de référence prédéterminée (A₁), et des deuxièmes moyens d'obtention de quantité d'air d'admission (S204, S210) pour obtenir la quantité d'air d'admission en fonction d'une grandeur de sortie du capteur d'écoulement d'air (24) lorsque la quantité de refoulement de gaz d'échappement est supérieure à la valeur de référence (A₁).

5. Appareil de commande selon la revendication 4, **caractérisé en ce qu'**il comprend en outre :
des moyens d'obtention de quantité de refoulement en amont pour obtenir, en fonction d'une grandeur de sortie du capteur d'écoulement d'air (24), une quantité de refoulement (Aₐ) du gaz d'échappement qui atteint une partie en amont du système d'admission,
dans lequel les moyens d'obtention de quantité d'air d'admission comprennent en outre des troisièmes moyens d'obtention de quantité d'air d'admission (S208, S212) pour fonctionner à la place des premiers et deuxièmes moyens d'obtention de quantité d'air d'admission lorsque la quantité de refoulement de gaz d'échappement obtenue par les moyens d'obtention de quantité de refoulement en amont est supérieure à une autre valeur de référence (A₂) qui correspond au capteur d'écoulement d'air (24), et obtenir la quantité d'air d'admission en fonction d'un rapport de vitesse et charge du moteur à combustion interne (10).

6. Appareil de commande selon la revendication 4 ou 5, **caractérisé en ce que** les moyens d'obtention de quantité de refoulement (S202) sont configurés pour obtenir une valeur d'amplitude (Aₜ, Aₐ) d'une grandeur de sortie du capteur en tant que quantité de refoulement du gaz d'échappement.

7. Appareil de commande selon l'une quelconque des revendications 1 à 6, **caractérisé en ce qu'**il comprend en outre :
des moyens de avion de période de lecture pour établir une période de lecture du résultat du capteur de pression de suralimentation (48) plus courte au fur et à mesure qu'une pulsation de la pression de suralimentation devient plus grande, et déterminer la période de lecture dans un creux de la pulsation.

8. Procédé pour commander un moteur à combustion interne qui comprend un capteur d'écoulement d'air (24) qui détecte une quantité d'air d'admission d'un moteur à combustion interne (10), un turbocompresseur (40) qui suralimente l'air d'admission à l'aide de la pression d'échappement du moteur à combustion interne (10), un capteur de pression de suralimentation (48) qui est agencé en aval du capteur d'écoulement d'air (24) et détecte une pression de suralimentation de l'air d'admission suralimenté par le turbocompresseur (40), et des moyens de détection/commande d'état de fonctionnement pour détecter un état de fonctionnement du moteur à combustion interne (10), lesdits moyens de détection/commande d'état de fonctionnement comprenant des moyens de commande de soupape d'échappement (S100) pour avancer davantage une synchronisation de fermeture de soupape d'une soupape d'échappement (36) qu'une synchronisation de fermeture de soupape de référence selon l'état de fonctionnement du moteur à combustion interne (10), dans lequel des premiers moyens d'obtention de quantité d'air d'admission (S104, S106) obtiennent la quantité d'air d'admission en fonction d'une grandeur de sortie du capteur de pression de suralimentation (48) lorsqu'une quantité d'avance (α) de la synchronisation de fermeture de soupape de la soupape d'échappement (36) est égale ou inférieure à une valeur de révérence prédéterminée (θ₁), et des deuxièmes moyens d'obtention de quantité d'air d'admission (S104, S110) obtiennent la quantité d'air d'admission en fonction d'une grandeur de sortie du capteur d'écoulement d'air (24) lorsque la quantité d'avance (α) de la synchronisation de fermeture de soupape de la soupape d'échappement (36) est supérieure à la valeur de référence (θ₁), de sorte que les moyens d'obtention de quantité d'air d'admission obtiennent la quantité d'air d'admission en fonction d'une grandeur de sortie du capteur de pression de suralimentation (48) ou le résultat du capteur d'écoulement d'air (24), basé sur une comparaison d'une valeur de détection indiquant un état du moteur à combustion interne (10) et d'une valeur de référence prédéterminée.

9. Procédé pour commander un moteur à combustion interne qui comprend un capteur d'écoulement d'air (24) qui détecte une quantité d'air d'admission d'un moteur à combustion interne (10), un turbocompresseur (40) qui suralimente l'air d'admission à l'aide de la pression d'échappement du moteur à combustion interne (10), un capteur de pression d'air d'admission (48) qui est agencé en aval du capteur d'écoulement d'air (24) et détecte une pression de suralimentation de l'air d'admission suralimenté par le turbocompresseur (40), et des moyens de détection/commande d'état de fonctionnement pour détecter un état de fonctionnement du moteur à combustion interne (10) et comprenant des moyens d'obtention de quantité de refoulement (S202) obtenant, en fonction d'une grandeur de sortie du capteur de pression de suralimentation (48), une quantité de refoulement du gaz d'échappement qui est refoulée vers un système d'admission du moteur à combustion interne (10), dans lequel des premiers moyens d'obtention de quantité d'air d'admission (S204, S206) obtiennent la quantité d'air d'admission en fonction d'une grandeur de sortie du capteur de pression de suralimentation (48) lorsque la quantité de refoulement (Aₜ) de gaz d'échappement est égale ou inférieure à une valeur de référence prédéterminés (A₁), et des deuxièmes moyens d'obtention de quantité d'air d'admission (S204, S210) obtiennent la quantité d'air d'admission en fonction d'une grandeur de sortie du capteur d'écoulement d'air (24) lorsque la quantité de refoulement de gaz d'échappement est supérieure à la valeur de référence (A₁), de sorte que les moyens d'obtention de quantité d'air d'admission obtiennent la quantité d'air d'admission en fonction d'une grandeur de sortie du capteur de pression de suralimentation (48) ou d'une grandeur de sortie du capteur d'écoulement d'air (24), basé sur une comparaison d'une valeur de détection indiquant un état du moteur à combustion interne (10) et d'une valeur de révérence prédéterminée.
